# EUROPÄISCHE PATENTSCHRIFT

(11) **EP 2 955 841 B1**
(45) Veröffentlichungstag und Bekanntmachung des Hinweises auf die Patenterteilung: **30.08.2017**
(21) Anmeldenummer: 14172270.2
(22) Anmeldetag: 13.06.2014
(51) Int. Cl.: H02P 25/22, H02K 26/00, H02K 29/06, H02P 6/16, H02K 3/28

(54) **Motorvorrichtung mit separaten Wicklungssystemen und Mastermodul**
Motor apparatus with separate winding systems and master module
Dispositif de moteur ayant des systèmes d'enroulement distincts et un module maître

(43) Veröffentlichungstag der Anmeldung: 16.12.2015
(73) Patentinhaber: Siemens Aktiengesellschaft, 80333 München (DE)
(72) Erfinder: Müssenberger, Christian, 91058 Erlangen (DE); Pommer, Herbert, 81475 München (DE); Schlatterer, Georg, 86573 Zahling (DE); Spindler, Carsten, 07368 Remptendorf (DE); Stöppler, Guido, 90419 Nürnberg (DE)

(56) Entgegenhaltungen:
- EP-A1- 1 063 753
- US-A1- 2002 113 511
- US-A1- 2011 057 591
- US-A1- 2011 238 249
- US-A1- 2014 021 279

## Beschreibung

Die vorliegende Erfindung betrifft eine Motorvorrichtung mit einem Motor, der ein erstes Aktivteil mit mehreren jeweils separat ansteuerbaren Wicklungen und ein zweites Aktivteil aufweist, einer Steuereinrichtung, die eine Recheneinheit und für eine oder mehrere der Wicklungen jeweils ein Motormodul mit Stromrichter aufweist, und einer Sensoreinrichtung, die ausgelegt ist, ein Lagesignal des ersten Aktivteils in Bezug auf das zweite Aktivteil zu liefern. Darüber hinaus betrifft die vorliegende Erfindung ein entsprechendes Verfahren zum Steuern einer solchen Motorvorrichtung.

In Applikationen, in denen extrem hohe Kräfte und/oder Momente notwendig sind, ist es erforderlich, auf Motoren mit verteilten Wicklungssystemen zurückzugreifen. Dies ist z. B. bei Segmentmotorapplikationen oder bei Parallelschaltung von Linear- und Torquemotoren, aber auch beispielsweise bei Spindelmotoren mit zwei Wicklungssystemen der Fall. Hierbei kommen jeweils quasi parallel arbeitende Umrichter zum Einsatz, wobei jeder Umrichter ein Wicklungssystem ansteuert und seinen eigenen Geber benötigt, um Lageinformation bezüglich der relativen Lage seiner Aktivteile (z. B. Ständer zu Läufer) zu erhalten.

Ein Segmentmotor wird in bisher realisierten Applikationen in einer Art Master-Slave-Konfiguration betrieben. Hierzu ist das erste Motormodul, welches einen Umrichter beziehungsweise Stromrichter, insbesondere einen Frequenzumrichter mit Spannungszwischenkreis, beinhaltet, der Master in der Drehzahlregelung und alle weiteren Motormodule, welche ebenfalls einen Stromrichter bzw. Umrichter beinhalten, werden als Momentenslaves betrieben. Gleiches gilt für leistungsstarke Linear- und Torquemotoren, die mit mehreren Motormodulen betrieben werden. Als Beispiel können hier Doppelkammeranwendungen oder große, sehr steife Gussschwenkachsen genannt werden. Alternativ ist hierzu mit überlagerter Steuerung auch ein echter Master-Slave-Betrieb mit Momentenausgleichsregler möglich.

Bislang war es erforderlich, dass jedes Motormodul eine individuelle Lageinformation für die Kommutierung mittels eines eigenen Gebers, welcher jeweils über ein entsprechendes Sensormodul an das Motormodul angeschlossen ist, erhält. Dazu sind in der Regel entweder auf einer gemeinsamen Maßverkörperung mehrere Geberköpfe (jeweils einer pro Motormodul) angebracht, oder es wird nur ein Lesekopf verwendet und das Gebersignal über eine Gebersplittung vervielfältigt. Die vervielfältigten Gebersignale werden dann jeweils über ein Sensormodul dem entsprechenden Umrichter bereitgestellt.

Die Aufgabe der vorliegenden Erfindung besteht darin, eine Motorvorrichtung mit mehreren Wicklungssystemen bereitzustellen, die einfacher aufgebaut ist. Darüber hinaus soll ein entsprechendes Verfahren zum einfachen Steuern einer solchen Motorvorrichtung angegeben werden.

Erfindungsgemäß wird diese Aufgabe gelöst durch eine Motorvorrichtung mit den Merkmalen des Anspruchs 1. Darüber hinaus wird erfindungsgemäß bereitgestellt ein Verfahren zum Steuern einer Motorvorrichtung mit den Merkmalen des Anspruchs 8.

In vorteilhafter Weise wird also bei einer Motorvorrichtung mit mehreren separat ansteuerbaren Wicklungen, die voneinander unabhängig sind, nicht jede dieser Wicklungen völlig unabhängig voneinander angesteuert. Vielmehr wird eine Lageinformation zur Ermittlung eines Kommutierungswinkels nicht nur für ein einziges Motormodul (Stromrichter) verwendet, sondern diese Lageinformation wird auch für weitere Motormodule der Ansteuereinrichtung des Motors genutzt. Es wird also ein hierarchisches System aufgebaut, bei dem nur eines der Motormodule eine Lageinformation über ein Gebersignal erhalten und damit wie übliche Motormodule eingesetzt werden können. Die übrigen Motormodule (Slavemodule) erhalten die Lageinformation über eine Recheneinheit, welche diese wiederum von dem Mastermodul erhalten hat. Damit kann darauf verzichtet werden, für jedes Motormodul einen eigenen Geber beziehungsweise Sensor bereitzustellen. Auch ist es nicht notwendig, ein Gebersignal mit einer speziellen Splittereinrichtung zu vervielfältigen und den einzelnen Motormodulen individuell zukommen zu lassen.

Die eine Lage betreffende Information von der Recheneinheit zu einem Slavemodul kann, aber muss nicht, mit der Lageinformation von der Sensoreinrichtung zu dem Mastermodul identisch sein. Vielmehr kann die Information weiterverarbeitet und gegebenenfalls für das Slavemodul spezifisch parametriert sein. Bei dem Motor handelt es sich erfindungsgemäss um einen Segmentmotor, dessen erstes Aktivteil mehrere Segmente aufweist, wobei jede der Wicklungen je einem einzigen der Segmente des Segmentmotors zugeordnet ist. Da die Lage der einzelnen Segmente des Segmentmotors relativ zueinander bekannt ist, genügt es, die Lage eines der Segmente relativ zu dem Läufer festzustellen, um auch die relative Lage der übrigen Segmente zu dem Läufer zu kennen beziehungsweise ermitteln zu können.

In einem weiteren Beispiel, welches nicht Gegenstand der beanspruchten Erfindung ist, ist der Motor als Linearmotor oder Torquemotor ausgebildet, wobei die Wicklungssysteme parallel zueinander angeordnet sind. Dies bedeutet, dass die mehreren Wicklungssysteme parallel auf eine Achse (Drehachse oder lineare Achse) wirken und somit jedes der Wicklungssysteme bezogen auf die jeweilige Achse die gleiche oder jedenfalls eine vorbekannte Lage aufweist. Dies bedeutet, wenn die Lage eines ersten der Wicklungssysteme bekannt ist, ist auch die Lage eines zweiten der Wicklungssysteme bekannt, da die Wicklungssysteme untereinander eine feste räumliche Beziehung besitzen.

In einem weiteren Beispiel, welches nicht Gegenstand der beanspruchten Erfindung ist, ist der Motor ein rotierender Mehrwicklungsmotor, bei dem die mehreren Wicklungen (zwei, drei, etc.) bzw. mehreren Wicklungssysteme (z.B. jeweils U, V und W) ineinander angeordnet sind und zu dem Stator (erstes Aktivteil) gehören. Der Rotor (zweites Aktivteil) wird von allen Wicklungen/Wicklungssystemen angetrieben.

Bei einer Ausführungsform ist jedes der Motormodule mit Ausnahme des Mastermoduls ein Slavemodul des genannten Typs, d. h. ein Motormodul, das eine einzige, eine Lage betreffende Information bezüglich der Lage vom ersten zum zweiten Aktivteil basierend auf der Lageinformation direkt von den Recheneinheit erhält. Damit besitzt die gesamte Motorvorrichtung lediglich ein einziges Matermodul und mithin eine einzige Sensoreinrichtung, die ein einziges Lagesignal liefert. Somit lassen sich deutlich Kosten und Arbeitsaufwand für die Installation einsparen.

Unter Umständen besitzt die Motorvorrichtung jedoch eine zweite Sensoreinrichtung zum Bereitstellen eines zweiten Lagesignals des ersten Aktivteils in Bezug auf das zweite Aktivteil, wobei von der Recheneinrichtung aus dem Lagesignal und dem zweiten Lagesignal ein mittleres Lagesignal gebildet wird, auf der Basis dessen die Motormodule angesteuert werden. Dies bedeutet, dass zwei Signale vorliegen, die eine Aussage über die relative Lage zwischen erstem und zweitem Aktivteil liefern. Dies kann beispielsweise bei großen Motorvorrichtungen notwendig sein, die eine größere Exzentrizität besitzen. Somit lässt sich auch ein größerer Motor genau regeln.

Jedes Slavemodul kann ausschließlich momentengeregelt sein. Es kann also auf eine Lage- beziehungsweise Drehzahlregelung verzichtet werden, da eine derartige Regelung über das Mastermodul erfolgen kann, mit dem die Slavemodule in fester räumlicher Beziehung stehen.

Jedes der Motormodule kann jeweils mehrere der Segmente, welche untereinander parallel geschaltet sind, ansteuern. Dies bedeutet, dass ein Motormodul, d. h. ein einziger Stromrichter, mehrere Segmente ansteuern kann. Auch mit einem solchen Merkmal lässt sich ein Kompromiss zwischen Regelungsaufwand und Laufeigenschaften des Motors finden.

Ferner kann jedes Segment über einen jeweils separaten Leistungsschutzschalter angesteuert werden. Damit kann sichergestellt werden, dass die Leitungen und Wicklungen der einzelnen Segmente nicht überlastet werden.

Vorzugsweise sind die Motormodule untereinander und mit der Recheneinheit mittels eines Datenbusses verbunden. Mit einem solchen Datenbus können Motorvorrichtungen individuell modular aufgebaut werden, ohne eine komplizierte Datenkommunikation bereitstellen zu müssen.

Die oben genannten weiterbildenden Merkmale der Erfindung beziehen sich nicht nur auf die Motorvorrichtung, sondern bilden auch das erfindungsgemäße Verfahren weiter.

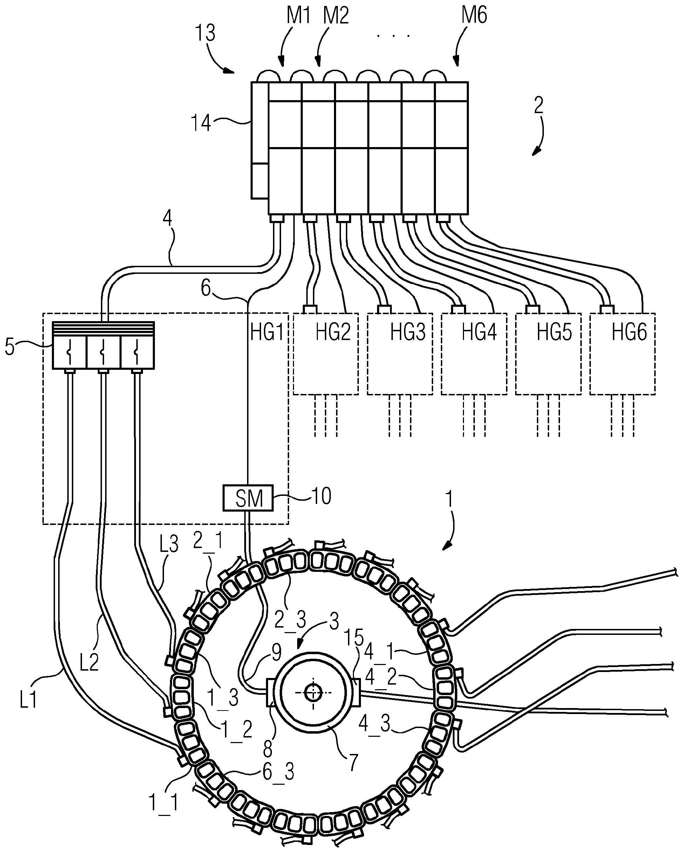

Die vorliegende Erfindung wird anhand der beigefügten Zeichnung näher erläutert, die eine Prinzipskizze einer erfindungsgemäßen Motorvorrichtung wiedergibt.

Die nachfolgend näher geschilderten Ausführungsbeispiele stellen bevorzugte Ausführungsformen der vorliegenden Erfindung dar. Die Beispiele beruhen auf dem Grundgedanken, dass bei Motoren mit verteilten Wicklungssystemen prinzipiell nur ein einziges Gebersignal notwendig ist, wenn die Wicklungssysteme mit ihren Umrichtern parallel betrieben werden. Mit einer Software-Applikation kann dies realisiert werden und es kann auf unnötige Hardware-Komponenten zur Gebersignalerzeugung verzichtet werden. Darüber hinaus kann der Verdrahtungsaufwand sowie die Fehleranfälligkeit reduziert werden.

Die Figur zeigt symbolisch einen Segmentmotor 1 und eine Ansteuereinrichtung 2, die zusammen mit einer Sensoreinrichtung 3 am Segmentmotor 1 eine beispielhafte Motorvorrichtung darstellen.

Der Segmentmotor 1 besitzt ein verteiltes Wicklungssystem. Dies bedeutet, dass sein Stator mehrere unabhängige am Umfang verteilte Wicklungen besitzt, von denen jede hier ein Segment 1_1, 1_2, 1_3, 2_1, ... 6_3 darstellt. Der Segmentmotor 1 besitzt hier achtzehn am Umfang gleich verteilte Segmente. Die Anzahl der Segmente ist jedoch nicht darauf beschränkt, sondern kann im Prinzip beliebig gewählt werden. Darüber hinaus ist es auch nicht notwendig, dass die Segmente am Umfang gleich verteilt sind. Vielmehr genügt es beispielsweise für einen Stellmotor, der einen kleinen Winkelbereich abzudecken hat, Segmente lediglich in einem Teilbereich des Kreises vorzusehen, oder für andere Anwendungen die Segmente anders anzuordnen.

Jeweils drei Segmente sind hier zu einer Gruppe zusammengefasst. Auch die Anzahl der Segmente pro Gruppe ist beliebig wählbar. So kann beispielsweise auch pro Gruppe lediglich ein einziges Segment oder auch zwei Segmente, vier Segmente usw. gewählt werden.

In dem vorliegenden Beispiel der Figur bilden die in Umfangsrichtung hintereinander angeordneten Segmente 1_1, 1_2 und 1_3 eine erste Gruppe, die hintereinander angeordneten Segmente 2_1 bis 2_3 eine zweite Gruppe usw.

Die Segmente der ersten Gruppe werden parallel von einem Motormodul M1 der Ansteuereinrichtung 2 angesteuert. Dies bedeutet, dass sie jeweils mit dem gleichen Leistungssignal angesteuert werden. Dazu wird ein vom Motormodul M1 ausgehendes Leistungssignal in einer Leistungsleitung 4 in drei Ansteuersignale, also ein Ansteuersignal pro Segment der Gruppe, in den Motorzuleitungen L1, L2 und L3 aufgeteilt. Wenn also das Motormodul M1 beispielsweise 150 A liefert, erhält jede Wicklung beziehungsweise jedes Segment dieser ersten Gruppe hier 50 A. Dazu ist ein Splitter 5 vorgesehen, der das Leistungssignal aus der Leistungsleitung 4 auf die drei Motorzuleitungen L1, L2 und L3 gleich verteilt. Der Splitter 5 ist hier außerdem mit Leistungsschutzschaltern versehen, um die Motorzuleitungen L1, L2 und L3 der Segmente 1_1, 1_2 und 1_3 vor zu hohen Strömen zu schützen.

Das Motormodul M1 mit einem Um- beziehungsweise Stromrichter liefert hier nicht nur ein Steuersignal für die Segmente 1_1, 1_2 und 1_3, sondern erhält auch Sensorinformationen über eine Sensorleitung 6. Eine solche Sensorinformation ist eine Lageinformation, die von der Sensoreinrichtung 3 erzeugt wird. Speziell enthält die Sensoreinrichtung 3 einen Geberring 7, der fest an einem nicht dargestellten Rotor des Segmentmotors 1 befestigt ist. Dieser Geberring 7 dreht sich also mit dem Rotor und wird von einem Geberkopf 8 der Sensoreinrichtung 3 abgegriffen. Damit wird ein Lagesignal generiert, welches eine Lageinformation des segmentierten Stators (erstes Aktivteil) gegenüber dem Rotor (zweites Aktivteil) darstellt.

Das Lagesignal vom Geberkopf 8 wird über ein Geberkabel 9 zu einem Sensormodul (SM) 10 geführt. Das Lagesignal kann alternativ auch direkt in das Motormodul M1 eingespeist werden.

Die Komponenten Splitter 5 und Sensormodul 10 sind hier als Hardwaregruppe HG1 zusammengefasst. Diese Hardwaregruppe ist insgesamt optional und für die Erfindung nicht wesentlich. Baugleiche Hardwaregruppen HG2 bis HG6 können im vorliegenden Beispiel jedoch dazu verwendet werden, die weiteren Gruppen von Segmenten 2_1, 2_2, 2_3, ..., 6_1, 6_2, und 6_3 jeweils ausgehend von Motormodulen M2 bis M6 anzusteuern. Die Hardwaregruppen HG2 bis HG6 sind nur insoweit baugleich mit HG1, als dass sie kein Sensormodul 10 besitzen und kein Lagesignal von einem Geber aufnehmen.

Die Motormodule M1 bis M6 können auch baugleich gestaltet sein. Jedes dieser Motormodule besitzt einen Um- beziehungsweise Stromrichter und steuert damit die jeweilige Gruppe von Segmenten an. So steuert beispielsweise das Motormodul M2 die Segmente 2_1, 2_2 und 2_3 an und das Motormodul M6 die Segmente 6_1, 6_2 und 6_3.

Die Motormodule M1 bis M6 sind untereinander über einen Datenbus 13 miteinander signaltechnisch verbunden. Außerdem ist über den Datenbus 13 auch eine Recheneinheit (CPU) an die Motormodule M1 bis M6 angeschlossen.

Das Motormodul M1 ist hier als Mastermodul konfiguriert. Es ist in dem gewählten Beispiel das einzige Motormodul, welches eine Lageinformation beziehungsweise ein Lagesignal von der Sensoreinrichtung 3 erhält. Es nützt diese Lageinformation, um daraus einen Kommutierungswinkel für die Segmente 1_1, 1_2 und 1_3 des Segmentmotors 1 selbst zu berechnen oder von der Recheneinheit 14 berechnen zu lassen. Die Recheneinheit 14 erhält von dem Mastermodul M1 die Lageinformation beziehungsweise den Kommutierungswinkel und steuert damit die Umrichter der Module M2 bis M6, die Slavemodule darstellen. Dazu liefert die Recheneinheit 14 entweder die Lageinformation oder direkt die entsprechenden Kommutierungswinkel an die Slavemodule M2 bis M6.

Ein Segmentmotor, insbesondere wenn er verhältnismäßig groß ist, kann einen unerwünscht hohen Exzentrizitätsfehler aufweisen. Daher kann es notwendig sein, eine zusätzliche Lageinformation des Rotors zu gewinnen und zur Ansteuerung der Segmente heranzuziehen. In der Figur ist deshalb symbolisch ein zweiter Geberkopf 15 angedeutet, der den Geberring 7 abtastet und hier dem ersten Geberkopf 8 gegenübersteht. Dieser zweite Geberkopf 15 liefert hier also ein zweites Lagesignal, welches über das Mastermodul an die Recheneinheit 14 geliefert werden kann. Bei jedem der Geberköpfe 8 und 15 kann es sich um einen Inkrementalgeber oder Absolutwertgeber handeln.

Alternativ können die beiden Lagesignale auch der Recheneinrichtung zur Mittelwertbildung zugeführt werden. In diesem Fall kann das Motormodul M1 das einzige Mastermodul für die übrigen Slavemodule M2 bis M6 bleiben.

Die weiteren Anschlüsse der Segmente 2_1 bis 6_3 sind in der Figur lediglich symbolisch angedeutet. Nur die Anschlüsse der Segmente 4_1, 4_2 und 4_3 sind etwas länger dargestellt, was aber keinen Unterschied symbolisieren soll. Diese Anschlüsse würden dann beispielsweise an die Hardwaregruppe HG4 weitergeführt sein.

Bei einer alternativen Ausführungsform handelt es sich bei dem Motor nicht um einen Segmentmotor, sondern beispielsweise um einen Linear- oder Torquemotor mit parallel geschalteten Wicklungen. Im Falle eines Linearmotors handelt es sich bei den Aktivteilen um das Primär- und Sekundärteil. Sowohl bei dem Primärteil als auch bei dem Sekundärteil können parallele Wicklungen vorliegen, die in fester räumlicher Beziehung zueinander stehen. Dementsprechend genügt auch hier ein Geber zur Feststellung der Lage des Primärteils relativ zu dem Sekundärteil.

Falls es sich bei dem Motor um einen Torquemotor mit parallelen Wicklungen handelt, weist der Stator beispielsweise zwei axial hintereinander angeordnete ringförmige Statoren auf. Da auch diese Statoren in räumlicher Beziehung fest zueinander stehen, genügt ein einziger Geber zum Liefern einer Lageinformation bezüglich der relativen Lage des Rotors zu den Statoren. Jeder der mehreren Statoren ist auch hier beispielsweise durch ein separates Motormodul angesteuert. Dasjenige Motormodul, welches die Lageinformation direkt vom Geber erhält, dient wiederum als Mastermodul, während die anderen Motormodule als Slavemodule dienen.

Das erfindungsgemäße Prinzip kann auch auf einen Mehrwicklungsmotor wie demjenigen mit der Typbezeichnung 1FW4 von der Anmelderin angewandt werden. Der Stator wird hier mit zwei oder mehr mehrphasigen Wicklungssystemen (jeweils U-V-W), im einfachsten Fall auch nur mit zwei Wicklungen, die jeweils ineinander angeordnet sind, gebildet. Jedes der Wicklungssysteme bzw. jede der Wicklungen wird dabei von einem eigenen Motormodul (z.B. Frequenzumrichter mit Spannungszwischenkreis) versorgt. Eines der Motormodule, welches den Master bildet erhält von einer Sensoreinrichtung das Lagesignal. Das zweite bzw. weitere Motormodul stellt einen Slave dar, der dann das zugehörige weitere Wicklungssystem in Abhängigkeit von der einzigen, eine Lage betreffenden Information von dem Master steuert. Solche Mehrwicklungsmotoren sind vorzugsweise in einem Gehäuse untergebracht, aus dem die Anschlüsse aller Wicklungen (der Wicklungssysteme) herausgeführt sind, an welche die Motormodule anzuschließen sind. Einsatzgebiete derartiger Mehrwicklungsmotoren sind schnell drehende Spindeln und hochmomentige Motoren.

Im Folgenden wird die Funktionsweise der erfindungsgemäßen Motorvorrichtungen beziehungsweise der entsprechenden Verfahren in weiteren Details dargestellt. Innerhalb der Recheneinheit 14 des Antriebssystems ist die Geberinformation vom Geberkopf 8 am Mastermodul M1 bekannt. Da die Slavemodule M2 bis M6 vorzugsweise nur momentengeregelt betrieben werden, ist die Geberinformation nur nach dem Einschalten zur Rotorlageidentifikation (Kommutierung) notwendig. Durch die Kopplung aller Wicklungen beziehungsweise Statorteile über den permanentmagnetischen Rotor beziehungsweise die gemeinsame Sekundärteilspur und den über die Konstruktion festgelegten Einbau ist der Kommutierungswinkel für alle Statoren beziehungsweise Statorteile gleich. Diese Voraussetzung ist bei Segmentmotoren oder den beschriebenen parallelen Linear- und Torquemotoren immer der Fall. Mit einer Software-Applikation wird der Kommutierungswinkel mittels der Recheneinheit 14 vom Master M1 auf die Slaves M2 bis M6 übertragen. Somit kann eine Geber-Hardware für die Slaves komplett entfallen.

In vorteilhafter Weise wird also die Lageinformation, die für ein Wicklungssystem vorliegt, auch für andere Wicklungssysteme genutzt. Hierbei wird durch geschickte interne Weitergabe der Geberinformation des Masters an die Slaves die zeitaufwändige Rotorlageidentifikation jedes einzelnen Slaves vermieden und die Fehleranfälligkeit des Gesamtsystems deutlich reduziert. Vorteile ergeben sich, wie oben bereits angedeutet wurde, auch hinsichtlich des Hardwareaufwands. Pro Slavemodul kann ein Sensormodul eingespart werden, sowie entweder ein Geberkopf oder die Hardware zur Gebersignalsplittung. Darüber hinaus reduzieren sich der Verdrahtungsaufwand und der Platzbedarf im Schaltschrank. Ebenso wird die Fehleranfälligkeit der Verdrahtung vermindert, und Gebersignalfehler durch analoge Signalverarbeitung beziehungsweise Laufzeiteffekte bei digitaler Signalverarbeitung der externen Signalsplitter werden vermieden. Ein weiterer Vorteil besteht darin, dass mit dem Einsatz einer Software-Applikation auch absolute Geber verwendet werden können, auch wenn für diese keine Signalsplitter verfügbar sind.

## Patentansprüche

1. Motorvorrichtung mit
- einem Segmentmotor (1), der ein erstes Aktivteil mit mehreren unabhängigen am Umfang verteilten jeweils separat ansteuerbaren Wicklungen und ein zweites Aktivteil aufweist, wobei das erste Aktivteil mehrere Segmente (1_1, 1_2, ..., 6_3) aufweist und jede der Wicklungen je einem einzigen der Segmente des Segmentmotors zugeordnet ist,
- einer Ansteuereinrichtung (2), die eine Recheneinheit (14) und für eine oder mehrere der Wicklungen jeweils ein Motormodul (M1 bis M6) mit Stromrichter aufweist, und
- einer Sensoreinrichtung (3), die ausgelegt ist, ein Lagesignal des ersten Aktivteils in Bezug auf das zweite Aktivteil zu liefern, wobei
- eines der Motormodule (M1 bis M6) ein Mastermodul ist, das das Lagesignal von der Sensoreinrichtung (3) als einziges Motormodul direkt erhält und eine entsprechende Lageinformation an die Recheneinheit (14) überträgt,
- eines der Motormodule (M1 bis M6) ein Slavemodul ist, das eine einzige, eine Lage betreffende Information bezüglich der Lage des ersten gegenüber dem zweiten Aktivteil basierend auf der Lageinformation direkt von der Recheneinheit (14) erhält.

2. Motorvorrichtung nach einem der vorhergehenden Ansprüche, wobei jedes der Motormodule (M1 bis M6) mit Ausnahme des Mastermoduls ein Slavemodul des genannten Typs ist.

3. Motorvorrichtung nach einem der vorhergehenden Ansprüche, die eine zweite Sensoreinrichtung (15) zum Bereitstellen eines zweiten Lagesignal des ersten Aktivteils in Bezug auf das zweite Aktivteil umfasst, wobei von der Recheneinrichtung aus dem Lagesignal und dem zweiten Lagesignal ein mittleres Lagesignal gebildet wird, auf der Basis dessen die Motormodule (M1 bis M6) angesteuert werden.

4. Motorvorrichtung nach einem der vorhergehenden Ansprüche, wobei jedes Slavemodul ausschließlich momentengeregelt ist.

5. Motorvorrichtung nach einem der vorhergehenden Ansprüche, wobei jedes der Motormodule (M1 bis M6) jeweils mehrere der Segmente (1_1, 1_2, ..., 6_3), welche untereinander parallel geschaltet sind, ansteuert.

6. Motorvorrichtung nach Anspruch 5, wobei jedes Segment über einen jeweils separaten Leistungsschutzschalter angesteuert wird.

7. Motorvorrichtung nach einem der vorhergehenden Ansprüche, wobei die Motormodule (M1 bis M6) untereinander und mit der Recheneinheit (14) mittels eines Datenbusses (13) verbunden sind.

8. Verfahren zum Steuern einer Motorvorrichtung, die einen Segmentmotor (1), welcher ein erstes Aktivteil mit mehreren unabhängigen am Umfang verteilten jeweils separat ansteuerbaren Wicklungen und ein zweites Aktivteil aufweist, wobei das erste Aktivteil mehrere Segmente (1_1, 1_2, ..., 6_3) aufweist und jede der Wicklungen je einem einzigen der Segmente des Segmentmotors zugeordnet ist, und eine Ansteuereinrichtung (2), die eine Recheneinheit (14) und für eine oder mehrere der Wicklungen jeweils ein Motormodul (M1 bis M6) mit Stromrichter aufweist, besitzt, durch
- Bereitstellen eines Lagesignals betreffend eine Lage des ersten Aktivteils in Bezug auf das zweite Aktivteil,
- Liefern des Lagesignals direkt an ein einziges der Motormodule (M1 bis M6), das ein Mastermodul ist,
- Übertragen einer entsprechende Lageinformation aus dem Lagesignal an die Recheneinheit, und
Liefern einer einzigen, eine Lage betreffenden Information bezüglich der Lage des ersten gegenüber dem zweiten Aktivteil an eines der Motormodule (M1 bis M6), das ein Slavemodul ist, basierend auf der Lageinformation direkt von der Recheneinheit (14).

## Claims

1. Motor apparatus comprising:
- a segmented motor (1), which has a first active part having a plurality of independent, separately controllable windings distributed around the circumference and a second active part, wherein the first active part comprises a plurality of segments (1 1, 1_2, ..., 6_3), and each of the windings is assigned to a single segment of the segments of the segmented motor
- a control unit (2), which has a processing unit (14) and for each of one or more of the windings a motor module (M1 to M6) containing a power converter, and
- a sensor device (3), which is designed to supply a position signal for the first active part in relation to the second active part, wherein
- one of the motor modules (M1 to M6) is a master module, which receives the position signal directly from the sensor device (3) as the only motor module to do so, and transmits a corresponding piece of position information to the processing unit (14),
- one of the motor modules (M1 to M6) is a slave module, which receives directly from the processing unit (14) a single piece of position-related information regarding the position of the first active part in relation to the second active part based on the position information.

2. Motor apparatus according to one of the preceding claims, wherein each of the motor modules (M1 to M6) except the master module is a slave module of said type.

3. Motor apparatus according to one of the preceding claims, which has a second sensor device (15) for providing a second position signal for the first active part in relation to the second active part, wherein the processing unit forms from the position signal and the second position signal a mean position signal that is used as the basis for controlling the motor modules (M1 to M6).

4. Motor apparatus according to one of the preceding claims, wherein each slave module is solely under torque control.

5. Motor apparatus according to one of the preceding claims, wherein each of the motor modules (M1 to M6) controls a plurality of the segments (1_1, 1_2, ..., 6_3) at a time, which segments are interconnected in parallel.

6. Motor apparatus according to claim 5, wherein each segment is controlled via a separate circuit breaker.

7. Motor apparatus according to one of the preceding claims, wherein a data bus (13) is used to connect the motor modules (M1 to M6) to one another and to the processing unit (14).

8. Method for controlling a motor apparatus comprising a segmented motor (1), which has a first active part having a plurality of independent, separately controllable windings distributed around the circumference and a second active part, wherein the first active part comprises a plurality of segments (1_1, 1_2, ..., 6_3), and each of the windings is assigned to a single segment of the segments of the segmented motor, and comprising a control unit (2), which has a processing unit (14) and for each of one or more of the windings a motor module (M1 to M6) containing a power converter, by
- providing a position signal regarding a position of the first active part in relation to the second active part,
- supplying the position signal directly to a single motor module of the motor modules (M1 to M6), which module is a master module,
- transmitting to the processing unit a corresponding piece of position information obtained from the position signal, and
supplying directly from the processing unit (14) to one of the motor modules (M1 to M6), which motor module is a slave module, a single piece of position-related information regarding the position of the first active part in relation to the second active part based on the position information.

## Revendications

1. Dispositif de moteur comprenant
- un moteur (1) à segments, qui a une première partie active ayant plusieurs enroulements indépendants répartis sur le pourtour et excitables séparément, et une deuxième partie active, la première partie active ayant plusieurs segments (1_1, 1_2, ..., 6_3) et chacun des enroulements est associé à respectivement un seul des segments du moteur à segments,
- un dispositif (2) d'excitation, qui a une unité (14) d'ordinateur et, pour un ou plusieurs des enroulements, respectivement un module (M1 à M6) de moteur à convertisseur et
- un dispositif (3) capteur conçu pour fournir un signal de position de la première partie active par rapport à la deuxième partie active, dans lequel
- l'un des modules (M1 à M6) de moteur est un module maître, qui reçoit directement, en tant que seul module de moteur, le signal de position du dispositif (3) capteur et transmet une information de position correspondante à l'unité (14) d'ordinateur,
- l'un des modules (mal à M6) de moteur est un module esclave, qui reçoit directement de l'unité (14) d'ordinateur, sur la base de l'information de position, une information concernant la position en ce qui concerne la position de la première partie active par rapport à la deuxième partie active.

2. Dispositif de moteur suivant l'une des revendications précédentes, dans lequel chacun des modules (M1 à M6) de moteur, à l'exception du module maître, est un module esclave du type mentionné.

3. Dispositif de moteur suivant l'une des revendications précédentes, qui comprend un deuxième dispositif (15) capteur pour la mise à disposition d'un deuxième signal de position de la première partie active par rapport à la deuxième partie active, un signal de position médian, sur la base duquel les modules (M1à M6) du moteur sont excités, étant formé par le dispositif d'ordinateur à partir du signal de position et du deuxième signal de position.

4. Dispositif de moteur suivant l'une des revendications précédentes, dans lequel chaque module esclave est régulé exclusivement instantanément.

5. Dispositif de moteur suivant l'une des revendications précédentes, dans lequel chacun des modules (M1 à M6) de moteur excite respectivement plusieurs des segments (1_1, 1_2, ..., 6_3), qui sont montés entre eux en parallèle.

6. Dispositif de moteur suivant la revendication 5, dans lequel chaque segment est excité par un disjoncteur distinct.

7. Dispositif de moteur suivant l'une des revendications précédentes, dans lequel les modules (M1 à M6) de moteur sont reliés entre eux et à l'unité (14) d'ordinateur au moyen d'un bus (13) de données.

8. Procédé de commande d'un dispositif de moteur, qui a un moteur (1) à segments ayant une première partie active ayant plusieurs enroulements indépendants répartis sur le pourtour et excitables séparément, et une deuxième partie active, la première partie active ayant plusieurs segments (1_1, 1_2, ..., 6_3) et chacun des enroulements étant associé à respectivement un seul des segments du moteur à segments, et un dispositif (2) d'excitation, qui a une unité (4) d'ordinateur et, pour un ou pour plusieurs des enroulement, respectivement un module (M1 à M6) de moteur à convertisseur, par
- mise à disposition d'un signal de position concernant une position de la première partie active par rapport à la deuxième partie active,
- fourniture du signal de position directement à un seul des modules (M1 à M6) de moteur, qui est un module maître,
- transmission d'une information de position correspondante à partir du signal de position à l'unité d'ordinateur et
fourniture, directement par l'unité (14) d'ordinateur sur la base de l'information de position, d'une information unique concernant la position, se rapportant à la position de la première partie active par rapport à la deuxième partie active, à l'un des modules (M1 à M6) de moteur, qui est un module esclave.
